# EUROPEAN PATENT SPECIFICATION

(11) **EP 0 740 999 B1**
(45) Date of publication and mention of the grant of the patent: **12.06.2002**
(21) Application number: 95203568.1
(22) Date of filing: 28.12.1995
(51) Int. Cl.: B29D 30/20, B29D 30/38, B29D 30/46

(54) **A method and apparatus for building a laminate and forming a carcass for a tire from an assembly of tire components**
Verfahren und Vorrichtung zum Herstellen eines Laminats und zum Aufbau einer Reifenkarkasse aus einer Anordnung von Reifenbestandteilen
Procédé et dispositif de fabrication d'un produit stratifié et de confection d'une carcasse de pneu à partir d'un ensemble d'éléments de pneu

(30) Priority: 05.01.1995 US 369192
(43) Date of publication of application: 06.11.1996
(73) Proprietor: THE GOODYEAR TIRE & RUBBER COMPANY, Akron, Ohio 44316-0001 (US)
(72) Inventor: Benzing II, James Alfred, Stow, OH 44224 (US); Head, William James, Ravenna, OH 44266 (US); Downing, Daniel Ray, Uniontown, OH 44685 (US)
(74) Representative: Leitz, Paul

(56) References cited:
- EP-A- 0 246 497
- GB-A- 580 838
- US-A- 1 353 934
- US-A- 1 933 692
- US-A- 3 586 581
- US-A- 4 090 835
- US-A- 5 004 516
- US-A- 5 030 079

## Description

### Background of the Invention

This invention relates to a method and apparatus for building a laminate 10A and in forming a carcass for a radial ply pneumatic tire from an assembly of tire components.

US-A- 1,353,934 discloses a machine for making rubber elements for tires, having a plurality of calenders for rolling strips of rubber, a conveyor passing successively under said calenders, and pressure means for plying the strips as delivered to said conveyor from said calenders.

US-A- 5,030,079 relates to an apparatus for forming a strip of elastomeric material which is extruded onto a rotating roller where it is initially shaped by a die plate and then finally shaped by a calender roll.

GB-A- 580,838 discloses a method of applying strips of different plastic compositions to a textile fabric sheet by calendering.

US-A- 1 933 692 discloses a slab of material comprising superposed fabric plies, the ends of adjoining plies being stepped and oppositely diagonally inclined. The operation of forming the slab may be performed either manually or by machine.

Historically, the pneumatic tire has been fabricated as a laminate structure of generally toroidal shape having beads, a tread, belt reinforcement and a carcass. The tire is made of rubber, fabric, and steel. The manufacturing technologies employed for the most part involve assembling the many tire components from flat strips or sheets of material. Each component is placed on a building drum and cut to length such that the ends of a component meet or overlap creating a splice.

In the first stage of assembly the carcass would include one or more plies, and a pair of sidewalls, a pair of apexes, an innerliner (for a tubeless tire), a pair of chafers and perhaps a pair of gum shoulder strips. Annular bead cores can be added during this first stage of tire building, and the ply or plies can be turned around the bead cores to form the "ply turnups."

The carcass components (excluding the bead cores) would be either "butt spliced" or "lap spliced." A butt splice has the component ends joined but not overlapped, a lap splice has overlapping ends.

This intermediate article of manufacture would be cylindrically formed at this point in the first stage of assembly. The cylindrical carcass is expanded into a toroidal shape after completion of the first stage. of tire building. Reinforcing belts and the tread are added to the intermediate article during a second stage of tire manufacture, which can occur using the same building drum or work station.

During the expansion of the carcass, tensile stresses are imposed on the spliced and uncured components of the tire carcass.

In the case of plies, lap splices were preferred because the splice remained intact whereas butt splices would tend to pen or fail. Even with the good adhesion of the lap splice the cords adjacent the splice tended to be stretched compensating for the overlapped two layers of cords at the splice. This localized stretching creates a non-uniformity that is readily visible under x-ray or ultrasonic display.

The tire builder, in order to prevent the creation of tire uniformity problems has historically insured that the splices of the various layers of components were not circumferentially aligned. This non-alignment of splice joints was believed to improve the carcass overall durability, as measured by the ultimate burst strength of the tire. Tire engineers also have believed that tire uniformity could be improved if these discontinuities were deliberately circumferentially spaced around the carcass. This meant that each component had to be applied to the ply at the tire building station where each component was cut and spliced in a spaced order.

The subject matter of this patent application completely reverses this conventional wisdom as it relates to carcass construction. The carcass is manufactured with numerous components being formed and adhered to a conveying ply thus forming a laminate structure which can be wound onto rolls or spools for subsequent use at the tire building station. The laminate can then be cut using a novel cutting technique which results in a single splice line. The tire carcass built according to the present invention can actually increase the tire burst strength while reducing splice-related non-uniformities.

### Summary of the Invention

A method and apparatus 200 for building a laminate 10A and from an assembly of tire components suitable in forming a carcass 10 for a radial ply pneumatic tire 100 is disclosed.

The method of building a laminate 10A from an assembly of tire components suitable for use in forming a carcass 10 for a radial ply pneumatic tire 100 has the following steps: conveying a ply material 20, the ply material 20 being made of elastomeric material 24 reinforced by cords 22, the cords 22 being embedded in the elastomeric material 24 and being parallel, substantially equally spaced and oriented at an angle between 65° and 90° relative to the direction of conveyance; forming a plurality of continuous strips of elastomeric tire components, the strips of tire components having predetermined cross sections; and applying the plurality of continuous strips of tire components to at least one side of the ply material 20, while the ply material 20 is being conveyed, to form a laminate 10.

The method preferably may also include the steps of winding the laminate 10A onto a roll 210; cutting the laminate 10A parallel to the cords 22 when a predetermined length of laminate 10A is wound into the roll 210; transporting the roll 210 of laminate 10A to a tire building drum work station; and cutting the laminate 10A to a predetermined length; and applying the laminate 10A to a tire building drum.

The method step of applying the plurality of continuous strips of tire components also preferably includes the step of pressing the conveying ply 20 against the formed strips of tire components thereby affixing the components to the ply.

Preferably, the step of forming at least one of the continuous strips of tire components includes the step of calendering the component or components. Most preferably the step of forming the continuous strips of tire components includes the step of calendering a plurality of continuous strips of tire components of different predetermined cross sections at spaced locations along the conveying ply 20.

The method further may include the step of stitching the conveying ply 20 to a conveyor belt 207.

The method of forming the laminate 10A also may include the steps of extruding elastomeric material 25 for forming the continuous strip of tire components; and feeding the flow of extruded material 25 into the nip of calender rollers 350,352.

In some cases the method includes the step of splitting the flow of extruded material 25 into two flows 25A, 25B of extruded material into the nip of calender rollers 350,352 each flow 25A, 25B supplying material to form a distinct tire component. This step is desirable where two similar components are needed to build the carcass 10 and one calender 302 can form both components simultaneously. For automated construction of the laminate 10A the method should also include the step of metering the flow of extruded material, the flow being controlled to match the outflow of calendered material.

When the method includes the step of winding the laminate onto a roll 210, it preferably includes the step of applying a separation liner 11 to one side of the laminate 10 prior to winding the laminate 10A onto a roll 210.

In a preferred method for building a laminate 10A of tire components and for forming a radial ply tire carcass 10 from the laminate 10A, the method has the following steps of: using the tire ply material 20, made of elastomeric material 24 reinforced by parallel cords 22 embedding in the elastomeric material, as a conveyor strip for itself and other linearally moving tire components, the other tire components being continuously formed and affixed to the ply material 20 to form a laminate 10A as the ply material moves along the path of its conveyance; then, cutting the laminate 10 into sections of predetermined lengths, each section having a pair of ends 12,14, the respective cuts being along a cutting path between parallel cords in the ply material; then, splicing the two ends 12,14 of a cut section to one another to form a tire carcass 10; and then, shaping the tire carcass toroidally, the cords in the ply material being radially oriented.

The apparatus 200 for building a laminate 10A from an assembly of tire components suitable for use in forming a carcass for a radial ply pneumatic tire is described below. The apparatus 200 has an elastomeric material 24 reinforced by cords 22, the material being suitable for use as a tire ply, the ply material 20 having a first side 21 and a second side 23, the cords 22 being embedded in the elastomeric material 24 and being parallel and substantially equally spaced relative to adjacent cords 22; a means 204 for conveying the ply material 20 while the ply material 20 with the cords 22 oriented at an angle between 65° and 90° relative to the direction of conveyance; a means 206 for forming a plurality of continuous strips of elastomeric tire components, the strips of tire components having predetermined cross sections; and a means 208 for applying the plurality of continuous strips of tire components to at least one side 21,23 of the ply 20 while the ply 20 is being conveyed, thereby, to form a laminate 10A.

The apparatus 200 may further include a means 209 for winding the article onto a roll 210.

The means 300 for forming the continuous strips of tire components is a plurality of calender assemblies 302. Each calender assembly 302 has two calender rollers 350,352 and a means 360 for delivering processed elastomeric material 25 to a nip 354 radially above the two calender rollers 350,352. The calender assembly means 360 for delivering processed elastomeric material 25 includes an extruder 362.

The calender assembly 302 has a means 320 for laterally positioning the processed elastomeric material at a predetermined lateral location above the calender rollers 350,352.

The apparatus 200 and method described above is capable of forming and assembling the various elastomeric tire components into a laminate assembly 10A. The laminate assembly 10A is formed in an efficient and extremely precise manner which improves tire uniformity at lower manufacturing cost.

### Brief Description of the Drawings

**Figure 1** illustrates a perspective view of one embodiment of the apparatus 200 made in accordance with the invention, the laminate 10 not including apexes 30.

**Figure 2** illustrates a perspective view of a second embodiment of the apparatus 200 made in accordance with the invention, the laminate 10 formed with apexes 30.

**Figure 3A** illustrates one half of the laminate carcass subassembly 10 cross section prior to being formed cylindrically upon a tire building drum, the building drum not illustrated. The opposite half of the laminate 10 not illustrated is identical to the illustrated portion. **Figs. 3B-3F** show the laminate in various additional views. **Fig. 3G** shows the laminate 10 toroidally shaped after splicing.

**Figure 4** is a top view of one calender 302 taken along lines 4-4 of Figure 1, a portion of the calender 302 being shown in cross-section.

**Figure 5** is an end view of the calender 302 taken along lines 5-5 of Figure 4.

**Figure 6** is an end view of the calender 302 showing the calender roller support ends 310,312 in an expanded position and the roller 350,352 detached.

**Figure 7** is a perspective view of the calender 302 with rollers 350,352 attached.

**Figure 8** is a perspective view of the calender 302 with rollers 350,352 detached.

**Figure 9** is a perspective view of a roller transfer mechanism 400.

**Figure 10** is second view of the roller transfer mechanism 400 depicting rollers 350,352.

**Figure 11** is a third view of the transfer mechanism 400 being moved to a roller staging area 410.

### Definitions

"Apex" means an elastomeric filler located radially above the bead and interposed between the plies and the ply turnup.

"Axial" and "axially" means the lines or directions that are parallel to the axis of rotation of the tire.

"Bead" means that part of the tire comprising an annular tensile member wrapped by ply cords and shaped, with or without other reinforcement elements such as flippers, chippers, apexes, toe guards and chafers, to fit the design rim.

"Belt Structure" or "Reinforcing Belts" means at least two annular layers or plies of parallel cords, woven or unwoven, underlying the tread, unanchored to the bead, and having both left and right cord angles in the range from 17° to 27° with respect to the equatorial plane of the tire.

"Circumferential" means lines or directions extending along the perimeter of the surface of the annular tread perpendicular to the axial direction.

"Carcass" means an unvulcanized laminate of tire ply material and other tire components cut to length suitable for splicing, or already spliced, into a cylindrical or toroidal shape. Additional components may be added to the carcass prior to its being vulcanized to create the molded tire.

"Chafers" refers to narrow strips of material placed around the outside of the bead to protect cord plies from the rim, distribute flexing above the rim, and to seal the tire.

"Cord" means one of the reinforcement strands of which the plies in the tire are comprised.

"Equatorial Plane (EP)" means the plane perpendicular to the tire's axis of rotation and passing through the center of its tread.

"Innerliner" means the layer or layers of elastomer or other material that form the inside surface of a tubeless tire and that contain the inflating fluid within the tire.

"Ply" means a continuous layer of rubber-coated parallel cords.

"Radial" and "radially" mean directions radially toward or away from the axis of rotation of the tire.

"Radial Ply Tire" means a belted or circumferentially-restricted pneumatic tire in which the ply cords which extend from bead to bead are laid at cord angles between 65° and 90° with respect to the equatorial plane of the tire.

"Shoulder" means the upper portion of sidewall just below the tread edge.

"Sidewall" means that portion of a tire between the tread and the bead.

"Tread" means a rubber component which when bonded to a tire carcass includes that portion of the tire that come into contact with the road when the tire is normally inflated and under normal load.

"Tread Width" means the arc length of the tread surface in the axial direction, that is, in a plane parallel to the axis of rotation of the tire.

### Detailed Description of the Preferred Embodiment

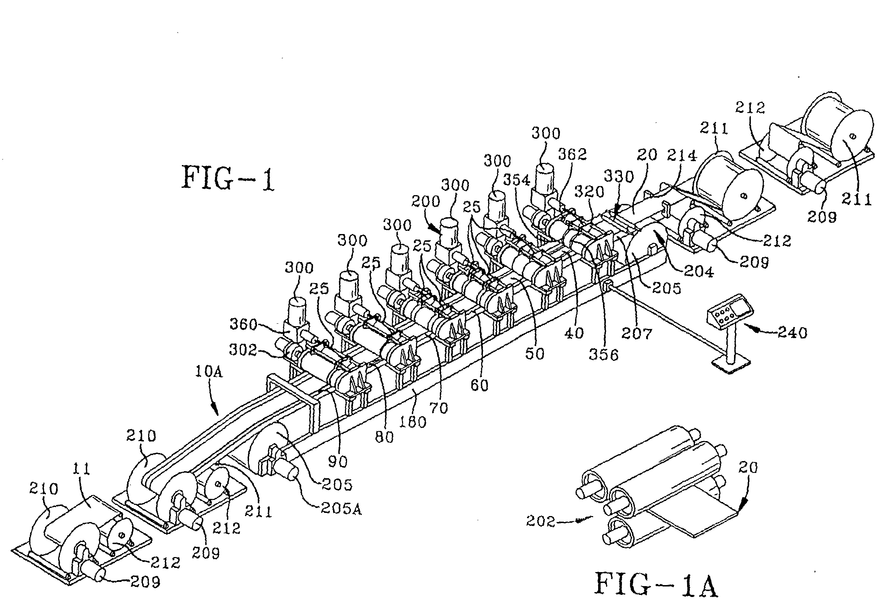

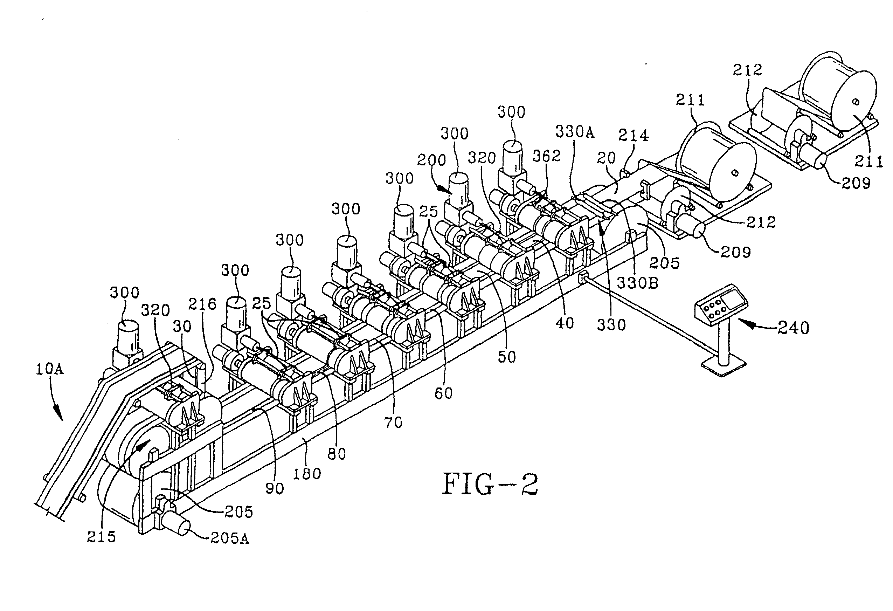

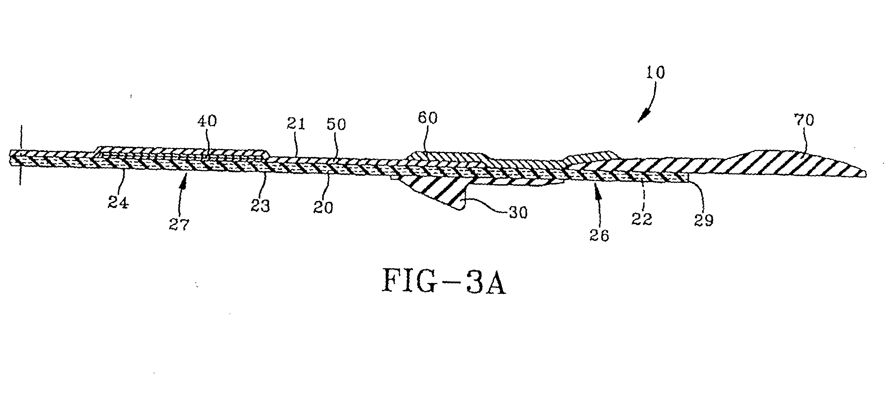

Referring the Figs. 1 and 2 there is illustrated two embodiments of the apparatus 200 for building a laminate 10A from an assembly of tire components suitable for use in forming a carcass for a radial ply pneumatic tire.

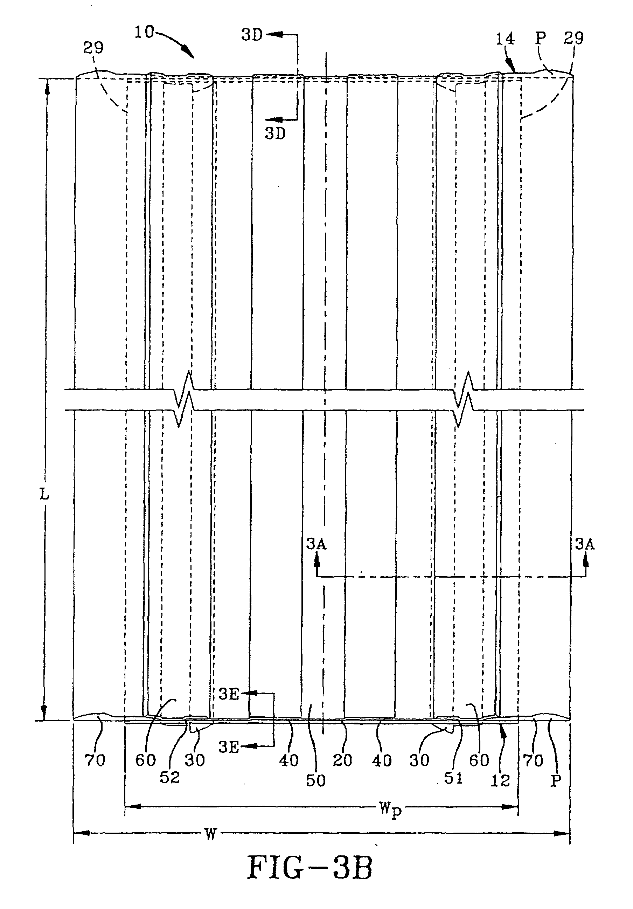

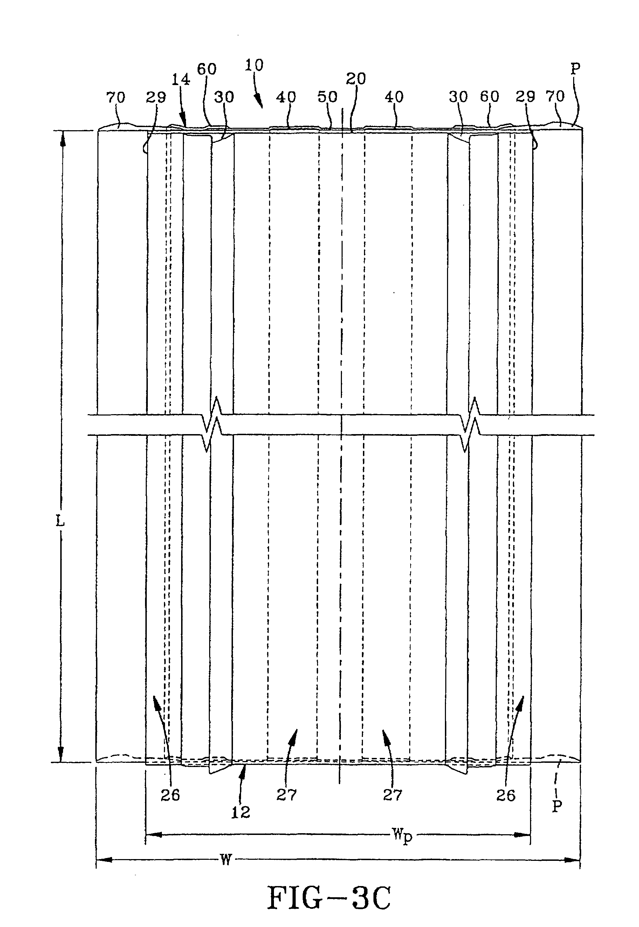

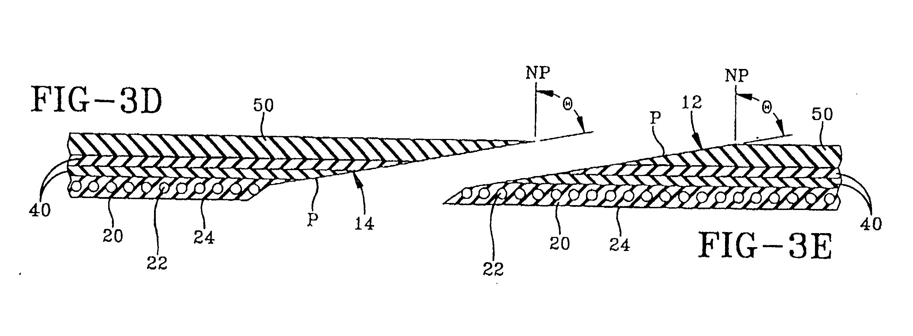

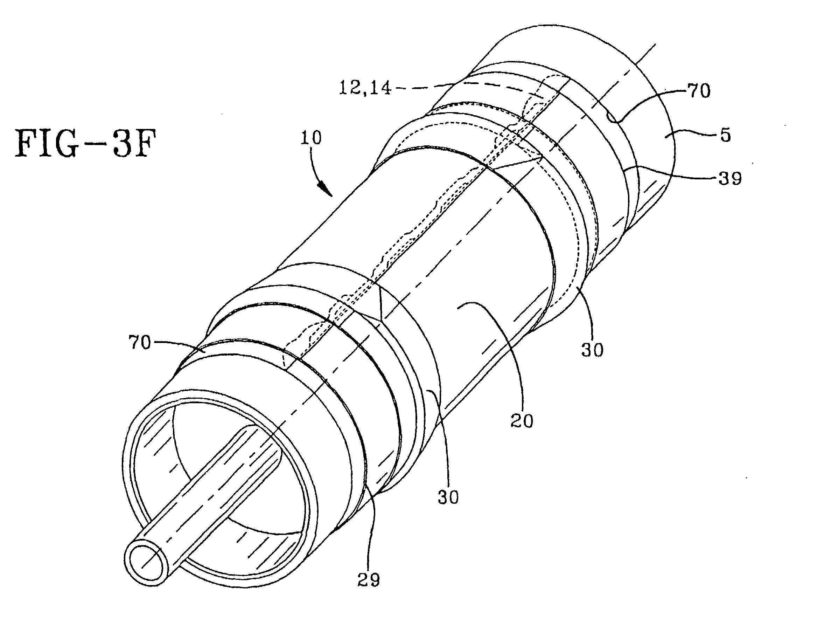

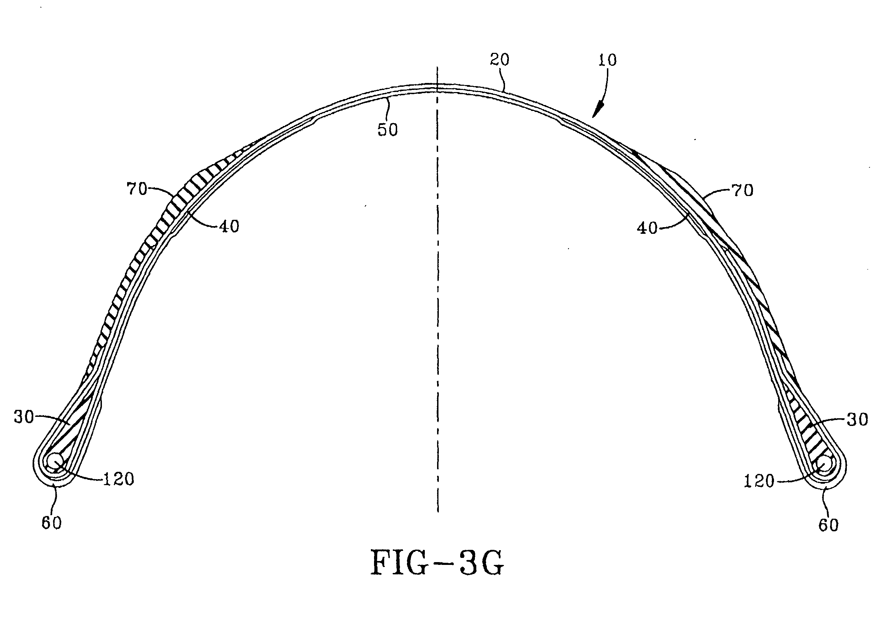

The laminate 10A as illustrated in Fig. 3A, 3B, 3C, 3D and 3E is formed as a substantially flat composite structure having many tire components attached and adhered to a conveying radial ply material 20.

As shown all of the components are either sheets or strips of material of substantially the same length. Each component shown is precisely located laterally relative to one another.

Fig. 3A depicts a ply 20, the ply being reinforced with parallel cords 22 which are encapsulated in unvulcanized rubber 24. The ply 20 as shown in Fig. 33 and 3C has a width (Wₚ) and length (L). The ply 20 has a pair of turnup portions 26 located at the lateral extremes of the ply 20. Attached to an outer surface 23 of the ply 20 is a pair of apexes 30. The apexes 30 are located on the ply in the turnup region 26 and are positioned to wrap about and primarily above a bead 120 at a later assembly station. The bead 120 preferably employed is a cable bead type.

Axially inward of the apexes and attached to an inner surface 21 of the ply 20 is a pair of shoulder gum strips 40. The shoulder gum strip acts as a rubber reinforcement in the shoulder portion 27 of the carcass 10.

A liner component 50 is attached to the ply and over the shoulder gum strips 40. The liner 50 creates an air impervious barrier for the radially inner air chamber of the tubeless type tire. The liners are generally made of Halobutyl rubber. The liner 50 has an axial width narrower than the ply 20. The liner width is sufficient to traverse axially outward of the beads when the tire is formed thus forming an air tight chamber between the tire 100 and the wheel upon assembly.

A chafer component 60 is shown at each lateral end 51,52 of the liner 50. The chafer 60 is attached to the liner 50, to the inner surface 21 of the ply 20 and slightly overlaps a sidewall component 70. The chafer 60 is positioned axially to provide a tough rubber reinforcement between the tire 100 and the rim flange of the wheel and is accordingly located in the bead region of the finished tire.

A sidewall component 70 is shown attached to the ply and extends laterally outward of the lateral ends 29 of the ply 20. The sidewalls 70 are slightly overlapped by the chafers 60.

Optionally, to build an outlined white letter tire or a whitewall tire, a whitewall strip 80 and a cover strip 90 may be added to the carcass material 10A as shown in Fig. 1 and Fig. 2.

It is believed preferable in cases where a non-cable bead is used in the tire construction that the apex be added to a latter stage as shown in Fig. 1. This enables the carcass material 10A to be wound into large rolls 210 without any distortion of the extruded components. Alternatively, in cases where an apex 30 and cable bead is employed it is believed preferable to couple the carcass assembly apparatus 200 of Fig. 2 to one or more tire building machines without requiring the carcass material 10A to be rolled onto a spool 210. This enables the carcass material 10A to be manufactured free of any potential distortions caused by handling and storage.

The above description of the laminate or carcass material 10A includes all of the elastomeric components required to build the tubeless tire carcass 10 and it is considered to be the best mode of practicing the invention because it is a most efficient method to produce such a tire carcass 10. Alternatively as noted above should the tire engineer choose, the apexes 30 could be added at a later stage of building to facilitate the use of different bead constructions such as hexagonal or strap type beads.

Additionally, it is considered within the scope of the invention that the laminate 10 may be built to include one ply 20 and at least two of the components selected from the groups of components described above. All the laminated components when cut to length form an individual carcass 10 having a unique common splice feature.

Figs. 3B and 3C depict the first end 12 and second end 14 respectively of the carcass 10. Both ends 12,14 are cut along an axial or lateral extending substantially straight line path substantially parallel of the cords 22 of the ply 24. The straight line cutting creates a first end or surface area 12 and a second surface area 14. As shown in Figs. 3D and 3E the surface areas 12 and 14 are inclined at an angle θ less than 90° relative to a normal plane (NP), the normal plane (NP) being perpendicular to the ply 20 and substantially parallel to the cords 22 in the ply 20. In the preferred embodiment the angle θ is about 80°. This high angle of inclination provides a large surface area of adhesion when the two ends 12,14 are spliced at the building drum 5 as shown in Fig. 3F.

The carcass material 10A when manufactured as shown in Figs. 1 or 2 can be made into continuous rolls. The carcass material 10A is then, in its preassembled state, stored in large rolls 210 which when sent to a tire building station is cut into sections of a precise length (L) by the unique cutting apparatus. The cut to length carcass 10 or section is then formed into a cylindrical shape as shown in Fig. 3F and then after adding the bead cores 120 and forming the turnups, the carcass 10 is toroidally shaped as shown in Fig. 3G.

Having described the laminate 10A, the readers attention is referred back to Figs. 1 and 2 for a description of the unique apparatus 200 used to form the laminate 10A. The apparatus 200 of Fig. 1 is the same as the apparatus 200 of Fig. 2 with the exception that the apparatus 200 of Fig. 2 includes a calender assembly station 300 to apply a pair of elastomeric apexes 30 to one side 23 of the conveyed ply 20. The apexes 30 are applied to a side 23 of the ply 20 opposite to other tire components therefore the conveyed laminate 10A is reversed in orientation to facilitate applying the formed apexes 30.

In the preferred method of practicing the invention rolls of ply material 20 are formed by conventional calendering means 202 and then cut to size. The cut ply stock 20 being spliced together forming lengths of ply material which are placed onto the roll, a well-known and common practice in the tire building art as shown in Fig. 1A. These full ply rolls 211 are placed at one end of the apparatus 200. The rolled ply material 20 has a woven separation liner 18 attached to one side 23. The operator attaches the separation liner 18 to a motor 209 driven windup spool 212 and he stitches the ply material 20 to a conveyor means 204 after feeding the ply material 20 through a pair of lateral position sensors 214 which monitor the alignment and position of the lateral edges 29 of the ply material 20. The conveyor means 204 has two large rotating drums 205 attached to a rigid frame 180. Wrapped over the drums is a conveying belt 207. The endless conveying belt 207 is preferably made of stainless steel material. The output end of the apparatus 200 has the rotation drum 205 driven by a variable speed motor 205A.

A means 330 for stitching the ply material 20 to the conveyor is shown. The means 330 for stitching as shown is a pair of rollers 330A,330B. Alternatively, the mean for stitching may be any device that applies pressure to the ply material affixing it to the belt, such devices can include individually spring loaded roller bearings aligned in multiple rows.

The conveyed ply material 20, with the cords oriented at an angle between 65° and 90° relative to the direction of conveyance, stitched to a conveying belt 207, is moved at a predetermined speed past a plurality of means 300 for forming a plurality of continuous strips of elastomeric tire components, the strips of tire components each having a predetermined cross section.

The means 300 for forming the tire components preferably has a plurality of calender assemblies 302.

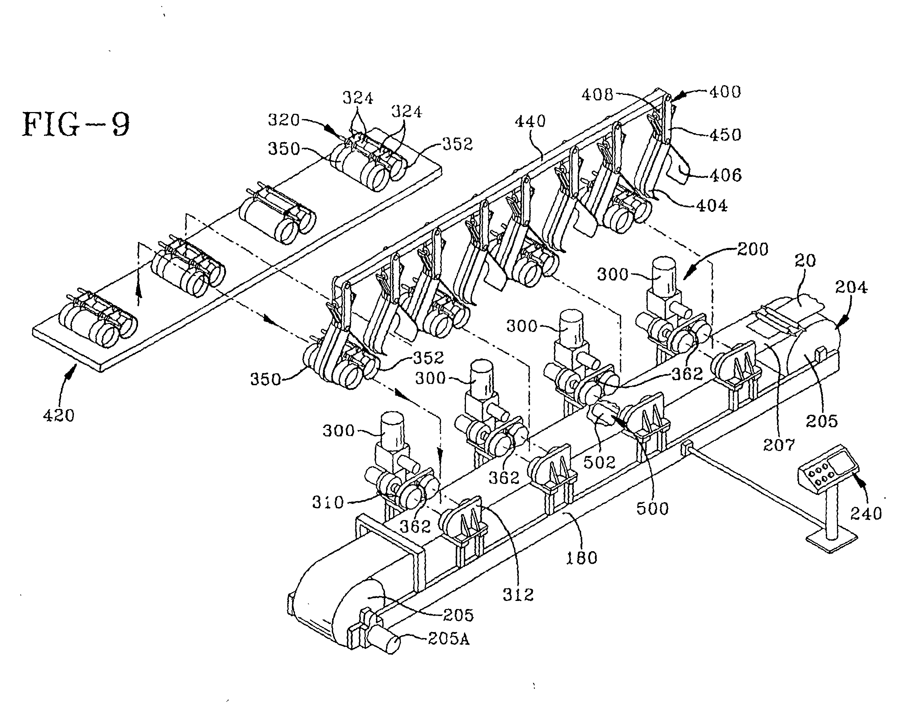

While forming the tire components the apparatus 200 includes a means 502 for applying the formed components directly onto at least one side 21 or 23 of the conveying ply material 20 as shown in Fig. 9 or to both sides 21,23 for the apparatus illustrated in Fig. 2., thus forming the laminate 10A. The means 502 for applying the tire component is a roller commonly referred to as a pinch roller mechanism. The roller is placed under the conveyor 207 and applies pressure between the conveying ply material 20 and the formed component thus insuring the component transfers to the conveying ply material. The formed laminate 10A can then be cut to a length suitable for building a tire carcass or as illustrated in Fig. 1 the laminate 10A can have a separation liner 11 attached to one side of the laminate and be wound onto a large roll 210 or spool. The large roll 210 as shown is driven by a motor 209 to facilitate winding the laminate 10A onto roll 210. As illustrated each roll 210,211 or spool 212 is place on a pair of rollers. Alternatively, each roller may have an axle which is supported and may be motor driven to accomplish what is shown in Fig. 1. When a sufficient amount or a predetermined length of the laminate 10A is wound onto a roll, the laminate 10A is cut parallel to the cords.

During the procedure of cutting the roll 210 of laminate 10A it is recommended that a duplicate laminate back up station or roll 210 be provided so that the apparatus 200 can either continue forming the laminate 10A or at least to minimize the stoppage of the machine for ply roll and laminate roll changing.

Similarly, as illustrated in Figs. 1 and 2 the supply of rolls 211 of ply material are best handled by having aligned rolls 211 of ply stock available to keep the apparatus 200 in a constant supply of material.

This may require the employment of a conventional overhead conveyor positioned between the apparatus and the first roller 210 or 211 to facilitate roller changeover, the overhead conveyor not illustrated.

The apparatus 200 as designed can be stopped for short periods of several minutes without creating non-uniformities in the laminate 10A. However, these stoppages in material forming can be minimized or in fact eliminated by the duplicate supply of ply material 211 and laminate rolls 210 as depicted.

Once a laminate roll 210 is full it can be transported to a storage area or directly to a tire building work station. Once at the tire building station the laminate 10A can be cut into sections of a predetermined length and applied to the tire building drum 5 as shown in Fig. 3F.

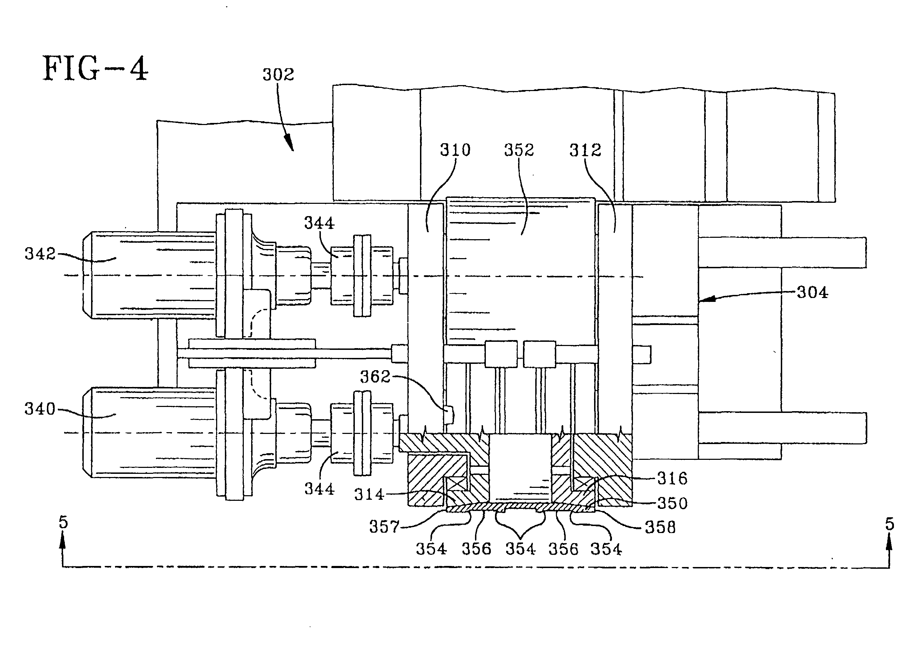

With reference to Fig. 4, a detailed view of a calender assembly 302 is shown. In the preferred embodiments of the invention the apparatus includes a plurality of calender assemblies 302. Each calender assembly 302 is fundamentally the same as the next or adjacent one with the exception of the pair of calender rollers 350,352.

Each calender assembly 302 represents a means for forming an elastomeric strip or strips of tire components. Preferably each calender 302 includes a means 360 for delivering processed elastomeric material 25 to the nip 354 of the two calender rollers 350,352, the nip 354 being between the two calender rollers. The means for delivering processed elastomer material 25 as shown is an extruder, preferably each apparatus 200 includes at least one such extruder 360, more preferably each calender assembly 300 includes one extruder 360.

The calender assembly 302 has a means 320 for laterally positioning the processed elastomeric material 25 at a predetermined lateral location above the calender rollers 350,352. The means 320 for positioning as shown in Figs. 1 and 2 are called plows 320. At least one pair of plows 320 is laterally positioned at a predetermined location radially above the pair of calender rollers 350,352. Each plow 320 has two rigid members 324 contoured to precisely fit above and between the two rollers. Preferably each plow rigid member 324 is placed laterally adjacent to a lateral end 354 of a component forming depression 356 located on one or both of the calender rollers 350,352. This positioning of the plows 320 secures and provides lateral support while preventing an overflow of calendered material from forming and adhering to the conveying ply material 20.

The extruder 360 feeding processed material to a pair of calender rollers 350,352 can be provided with a single feed source to produce one component such as the liner 50. However, when two identical components such as the gum shoulder strips 40 or the sidewalls 70 or the apex 30, or the chafer 60 is being formed, the extrudate can be split into two flow paths. One flow path feeding each component forming portions as shown in Figs. 1 and 2.

In order for the apparatus to function automatically, a means 362 for sensing and metering the flow of extrudate to the calenders must be provided. The means can simply be a sensor used in combination with the valving of the flow or the speed of the extruder or both. Nevertheless, it is believed preferable that the extruded material delivered to the calenders be monitored and controlled.

As shown in Figs. 1 and 2 a sensor can be provided in each calender assembly station, the sensors connected to a control panel 240 which can automatically adjust the flow of extrudate at a given station 300. The sensors 362 can be individual video cameras which send a picture back to a monitoring computer at the control panel 240.

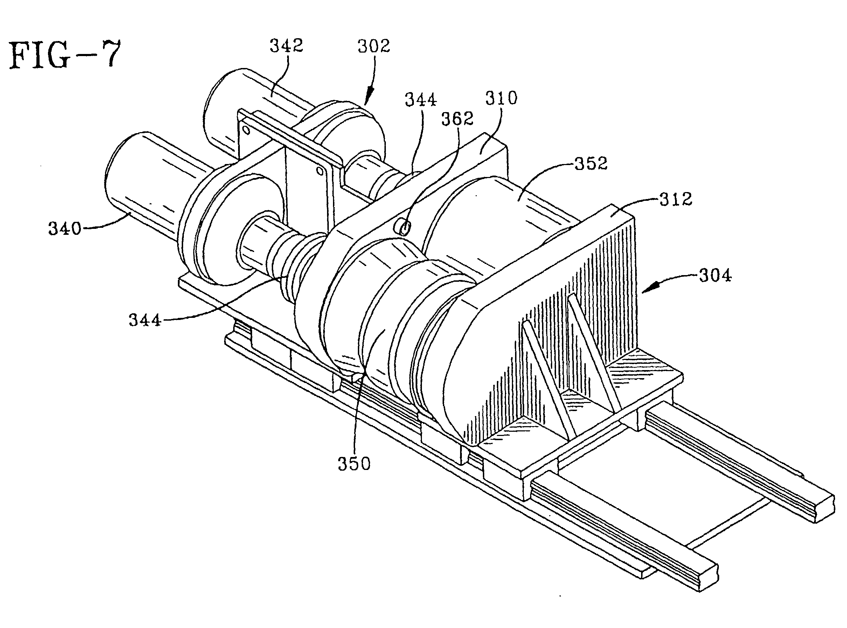

As shown in Figs. 4 through 8 each calender assembly 302 has two calender rollers 350,352, one roller being the transfer roller the other being the follower roller 352. Each roller 350,352 is a hollow generally cylindrical structure opened or tapered at each end 357,358 and having an axis of rotation R.

The calender assembly 302 has a means 304 for supporting the two calender rollers. The means for supporting the rollers has a first end 310 and a second end 312. The first end 310 and the second end 312 each have a pair of rotatable hubs 314,316, one hub 314,316 fitting into each end 357,358 of the roller 350,352. The pair of hubs 314, 316 for fitting into a roller have an axis of rotation R_{H} coincident with the axis of rotation R of the roller. Each hub 314,316 is conically tapered at an angle α of about 6°. The cylindrical rollers 350, 352 are similarly tapered so that upon assembly the fitment is secure so that no slippage occurs that might create a non-uniformity in the formed component.

As further illustrated in Fig. 4 each calender assembly has at least one, preferably two motors 340,342, a drive shaft 344 powered by each motor, the drive shaft being connected to a rotatable hub 314, the hub 314 providing rotational movement of one of the calender rollers 350 or 352.

Although one motor 340 is sufficient to drive one roller 350 it is believed preferable to have two variable speed motors 340,342, one motor driving each roller 350,352. The first motor 340 being connected to a roller 350 called the transfer roller 350 is synchronized to match the linear conveyor belt 207 speed so that the formed tire component can be applied to the conveying ply material 20 at about the same rate of speed at which the component is being formed, or possibly at a slightly higher speed.

The second motor 342 is connected to the roller 352 called the follower roller 352 and it provides rotational movement at a speed of about 95% that of the first motor 340. This differential speed of the rollers 350,352 insures that the calendered component always adheres to the conveying ply as opposed to attaching itself onto the following roller 352.

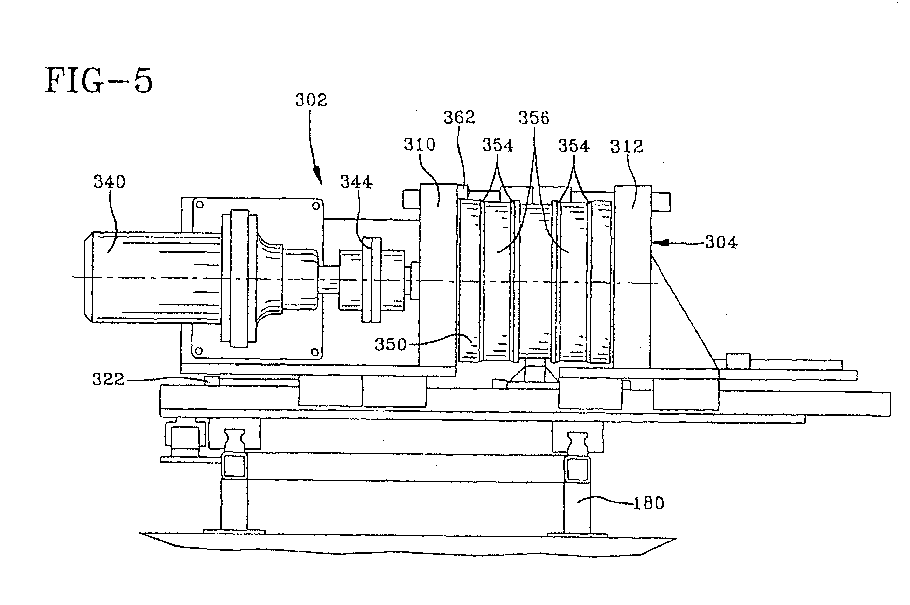

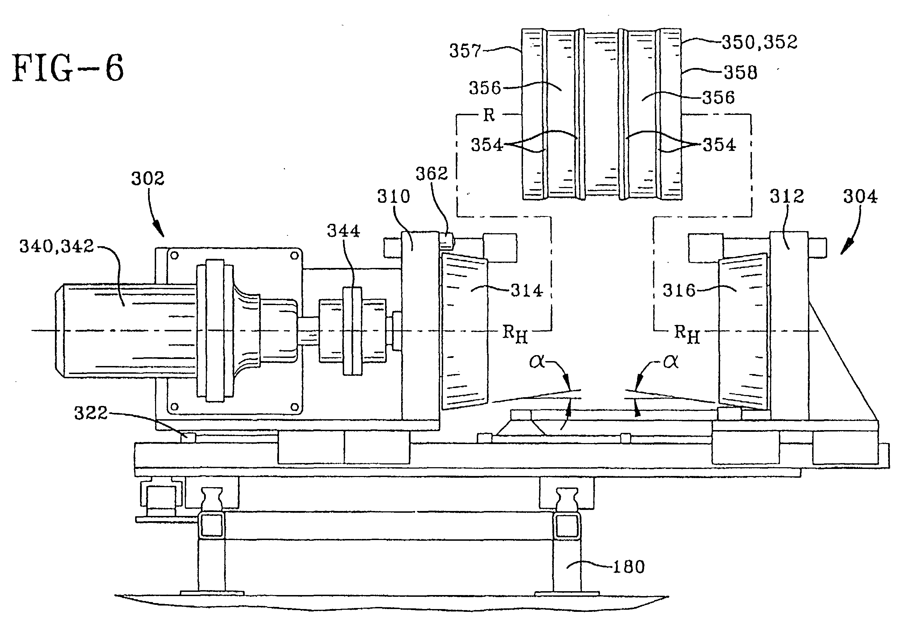

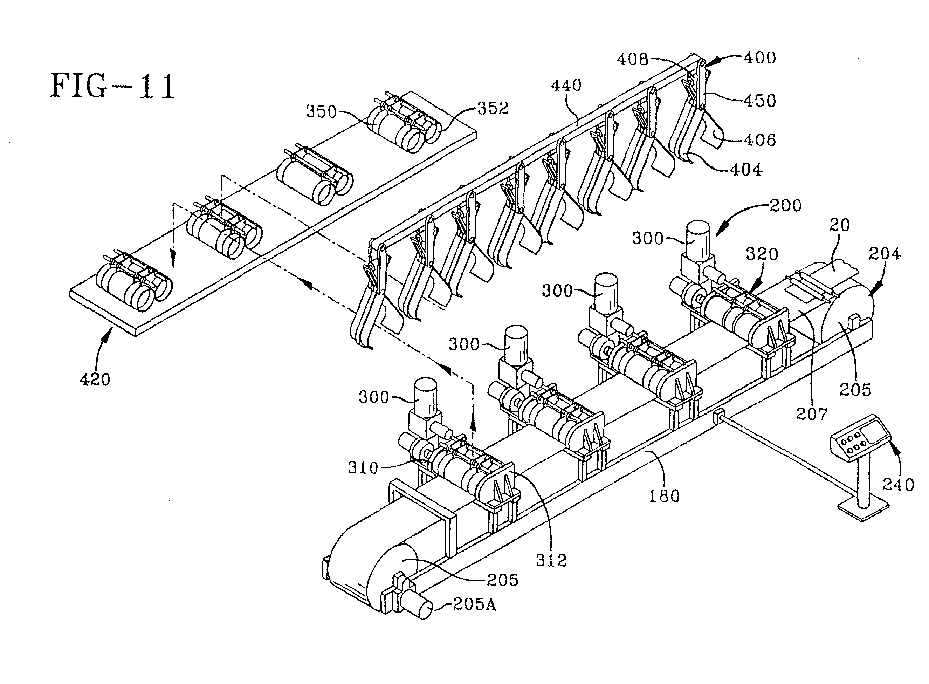

As shown in Figs. 5 through 11 each calender assembly 302 is adapted for quick roller changeover. This feature is accomplished in part by the method of attaching the roller cylinder 350,352 to a pair of tapered hubs 314,316 and by providing a means 322 for slidably expanding and retracting relative to one another the first and second ends 310,312 of the means 304 for supporting the calender rollers . As shown in Fig. 6 the second end 312 is slidably attached to the frame 180 of the apparatus 200 and upon actuation of a hydraulic cylinder 322 the second end 312 can slidably expand or retract thus permitting quick removal of the calender roller 350,352.

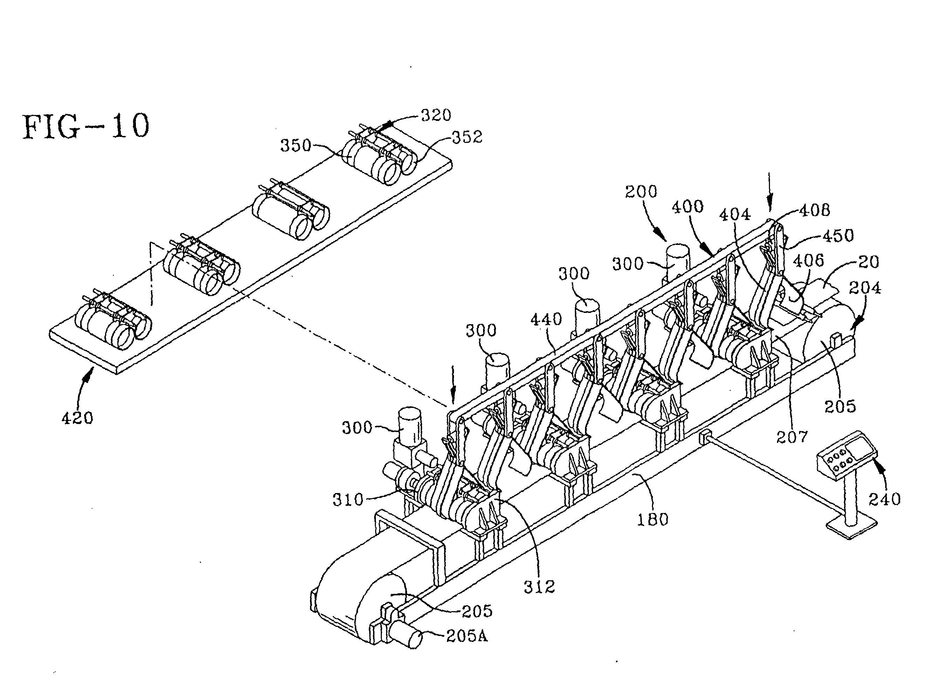

Figs. 9 through 11 illustrate how pairs of these quick change rollers 350,352 can be conveyed by an overhead transfer mechanism 400 to initially add the roller pairs to the apparatus 200. The mechanism 400 is lowered into position where the end of the support means 312 is closed to secure the calender rollers 350,352 into position as in Fig. 10. The overhead mechanism is then moved back to a roller staging area 420 awaiting the next set of roller pairs 350,352 to build a different size or style tire 100.

The apparatus 200 as illustrated has the conveying ply material 20 supported on a stainless endless belt 207. At each calender assembly station 300 a means 500 is provided for applying the plurality of continuous strips of elastomeric tire components to at least one side 21,23 of the conveying ply material 20 while the ply 20 is being conveyed to form a laminate 10A. The means 500 for applying as shown is a pinch roller 502 located below the stainless belt 207. The pinch roller 502 applies localized pressure between the belt 207 and conveying ply 20 and the transfer roller 350 which is carrying the formed tire component. This applied pressure adheres the component to the ply and thereby released the component from the transfer roller.

With regard to Fig. 2 it can be seen that when adding an apex 30 to the conveying ply 20 it is desirable to reorient the ply material 20 such that the other side 23 of the ply material 20 is available to receive the tire component. This is believed best accomplished by transferring the laminate 10A to a second conveyor 214 and then forming and applying the component as previously described and then to pull the laminate 10A off the second conveyor 215 over a series of rollers 216 and then either wind the material onto a roll 210 or cut it to the desired carcass length for immediate assembly into a cylindrical carcass 10 at one or more tire building stations.

The above described forming and applying the tire components to the conveying ply material 20 not only provides a more precise method of manufacture, it also increases the overall adhesion of the various components. By being laminated to the conveying ply 20 while still hot these strips of components have adhesion characteristics that are far superior to the prior art methods.

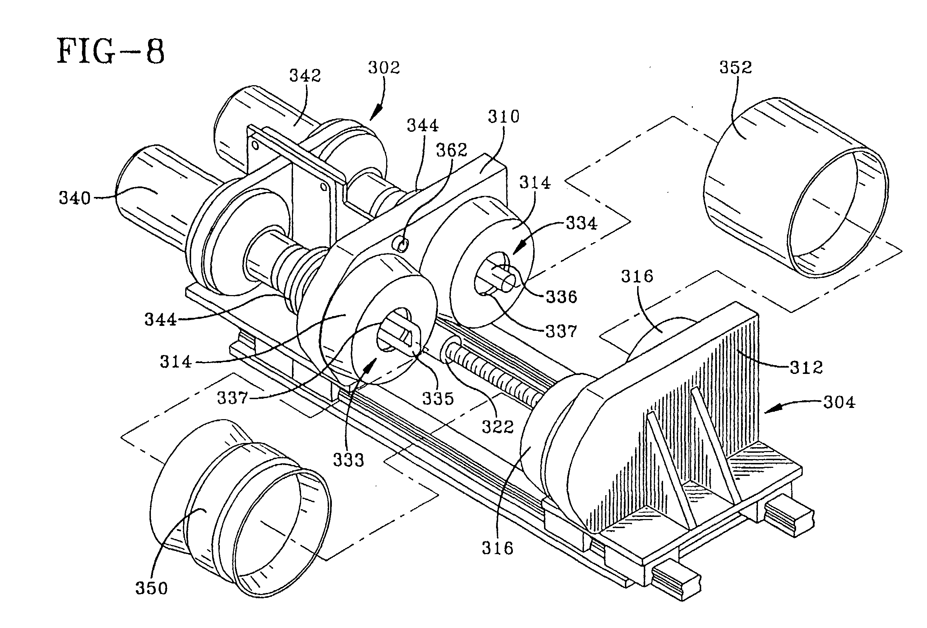

By winding the laminate 10A onto rolls 210 or by immediately building the cylindrical carcass the hot components are prevented from creating a differential shrinkage relative to the ply material 20 which is generally cool upon assembly. Alternatively, although not required the unvulcanized ply material 20 can be heated to approximate the temperature of the components to further avoid temperature related shrinkage differentials. In one embodiment the calender assembly includes a means for heating 333 or a means for cooling 334 the calender rollers 350,352. The means for heating 333 has a heating element 335 and the means for cooling 334 has a cooling element 336. The means 333,334 enter through an opening 337 in the hubs 314 or 316 as shown in Fig. 8. Each means 333, or 334 generates heating or cooling to the internal surfaces of the rollers 350,352 and are employed when the material being processed can be more efficiently applied using such a feature.

It is believed that the method and apparatus 200 described and claimed is a significant advancement in the state of tire building technology. Tires built according to the description of this and the related applications have yielded excellent burst strength while achieving superior building uniformity characteristics.

## Claims

1. A method for building a laminate (10A) from an assembly of tire components, the method comprising the steps of:
conveying a ply material (20) made of elastomeric material (24) reinforced by cords (22), the cords being embedded in the elastomeric material and being parallel, substantially equally spaced;
forming a plurality of continuous strips of elastomeric tire components, the strips of tire components having predetermined cross sections; and
applying the plurality of continuous strips of tire components to at least one side of the ply material (20) while the ply material is being conveyed, to form a laminate (10A); wherein the conveyed ply material (20) is moved by an endless conveying belt (207) at a predetermined speed past a plurality of means (300) for forming the plurality of continuous strips of elastomeric tire components, wherein the means (300) for forming the tire components have a plurality of calendar assemblies (302) having each two calendar rollers (350, 352), one roller being the transfer roller and the other the follower roller (352);
**characterized**
**in that** the cords of the ply material (20) are oriented at an angle between 65° and 90° relative to the direction of conveyance;
**in that** there are component forming depression (356) located on one or both of the calender rollers (350,352) and in that the formed tire components are applied to the conveying ply material (20) at about the same rate of speed at which the component is being formed, or at a slightly higher speed; and
**in that** the laminate is suitable for use in forming a carcass (10) in a first stage tire assembly for a radial ply pneumatic tire (100).

2. The method according to claim 1, comprising the steps of:
cutting the laminate (10A) to a predetermined length; and
applying the laminate (10A) to a tire building drum (5) to form an unvulcanized carcass from the laminate.

3. The method according to claim 1, wherein the step of applying the plurality of continuous strips of tire components includes the step of pressing the conveying ply (20) against the formed strips of tire components thereby affixing the components to the ply.

4. The method according to claim 1, wherein the step of forming the continuous strips of tire components includes the step of calendering a plurality of continuous strips of tire components of different predetermined cross sections at spaced locations along the conveyed ply (20).

5. The method according to claim 1, comprising the step of stitching the continuous strips of tire components to the conveyed ply (20).

6. The method according to claim 1 comprising the steps of:
locating a lateral edge (29) of the conveying ply (20); and
applying the continuous strips of tire components at predetermined locations relative to the lateral edge.

7. The method according to claim 1 comprising the steps of:
extruding elastomeric material (24) for forming at least one of the continuous strips of tire components; and
feeding the flow of extruded material (25) into calender rollers (350,352) that determine the cross sectional shape of the tire component.

8. The method according to claim 7 comprising the step of splitting the flow of extruded material into two flows (25A,25B) of extruded material into calender rollers (350,352), each flow supplying material formed by the calender rollers into tire components of distinct cross sectional shape.

9. The method according to claim 1 wherein at each calender assembly station (300) a means (500) is provided for applying the plurality of continuous strips of elastomeric tire components to at least one side (21,23) of the conveying ply material (20) while the ply (20) is being conveyed to form a laminate (10A).

10. The method according to claim 9 wherein the means (500) for applying the plurality of continuous strips of elastomeric tire components to at least one side (21,23) of the conveying ply material (20) is a pinch roller (502) located below the endless conveying belt (207), the pinch roller (502) applying localized pressure between the belt (207) and conveying ply (20) and the transfer roller (350) which is carrying the formed tire component.

11. The method according to claim 1 wherein the component forming depression (356) is located on the transfer roller (250) only.

12. Apparatus (200) for building a laminate (10A) from an assembly of tire components including a plurality of calender assemblies (302) for forming an elastomeric strip or strips of tire components;
the calender assemblies (302) being spaced along an endless conveying belt (204) wrapped over large rotating drums (205), driven by a variable speed motor (205A); and
each calender assembly (302) having two calender rollers (350,352), one roller being the transfer roller (350) and the other the follower roller (352);
**characterized by**
the rollers (350, 352) having component forming depressions (356) located on one or both of the calender rollers;
each calender assembly (302) having at least one, preferably two motors (340,342);
an extruder (360) for feeding processed material to the pair of calender rollers (350,352);
means (362) for sensing and metering the flow of extrudate to the calender rollers (350, 352); and by
the assembly of tire components being suitable for use in forming a carcass (10) for a radial ply pneumatic tire in a first stage tire assembly.

13. The apparatus (200) as claimed in claim 12, wherein the calender assemblies (302) have two variable speed motors (340,342), one motor driving each roller (350, 352).

14. The apparatus (200) as claimed in claim 12, wherein each assembly has a means (360) for delivering processed elastomeric material (25) to a nip (354) between the two calender rollers.

15. The apparatus (200) as claimed in claim 12, wherein the calender assembly (302) has a means (320) for laterally positioning the processed elastomeric material at a predetermined lateral location between the calender rollers (350,352).

16. The apparatus (200) as claimed in claim 12, wherein the calender assembly means (360) includes a means for heating (333) or a means for cooling (334) the calender rollers (350,352).

17. The apparatus (200) as claimed in claim 12, wherein the component forming depression (356) is located on the transfer roller (250) only.

## Patentansprüche

1. Verfahren zum Aufbau eines Laminats (10A) aus einer Anordnung von Reifen-Komponenten, mit den Schritten:
Zufördern eines aus mit Korden (22) verstärktem Elastomer-Material (24) hergestellten Lagenmaterials (20), wobei die Korde in dem Elastomer-Material eingebettet und mit im wesentlichen gleichen Abständen zueinander parallel sind;
Ausbilden einer Vielzahl kontinuierlicher Streifen von Elastomer-Reifenkomponenten, wobei die Streifen von Reifenkomponenten vorgegebene Querschnitte besitzen; und
Anlegen der Vielzahl kontinuierlicher Streifen von Reifenkomponenten an mindestens eine Seite des Lagenmaterials (20), während das Lagenmaterial gefördert wird, um ein Laminat (10A) zu bilden; wobei das geförderte Lagenmaterial (20) durch ein endloses Förderband (207) mit einer vorgegebenen Geschwindigkeit an einer Vielzahl von Mitteln (300) zum Ausbilden der Vielzahl kontinuierlicher Streifen von elastomeren Reifenkomponenten vorbei bewegt wird, wobei die Mittel (300) zum Formen der Reifenkomponenten eine Vielzahl von Kalander-Anordnungen (302) mit jeweils zwei Kalander-Walzen (350, 352) aufweisen, von denen eine Walze die Übertragungswalze und die andere die Folgewalze (352) ist;
**dadurch gekennzeichnet,**
**daß** die Korde des Lagenmaterials (20) mit einem Winkel zwischen 65 °und 90° relativ zur Förderrichtung ausgerichtet sind;
**daß** Komponentenbildungs-Vertiefungen (356) an einer oder an beiden Kalander-Walzen (350, 352) angeordnet sind und daß die geformten Reifenkomponenten an das Förderlagenmaterial (20) mit etwa der gleichen oder mit einer leicht höheren Geschwindigkeitsrate angelegt werden, mit der der Bestandteil geformt wird; und
**daß** das Laminat zur Verwendung beim Ausbilden einer Karkasse (10) in einer ersten Reifenaufbaustufe für einen Radiallagen-Luftreifen (100) geeignet ist.

2. Verfahren nach Anspruch 1, das die Schritte enthält:
Zuschneiden des Laminats (10A) auf eine vorgegebene Länge; und
Anlegen des Laminats (10A) an die Reifenaufbau-Trommel (5) zum Formen einer unvulkanisierten Karkasse aus dem Laminat.

3. Verfahren nach Anspruch 1, bei dem der Schritt des Anlegens der Vielzahl kontinuierlicher Streifen von Reifenkomponenten den Schritt des Andrückens der Förderlage (20) gegen die geformten Streifen von Reifenkomponenten enthält, um dadurch die Komponenten an der Lage zu befestigen.

4. Verfahren nach Anspruch 1, bei dem der Schritt des Formens der kontinuierlichen Streifen von Reifenkomponenten den Schritt des Kalanderns einer Vielzahl von kontinuierlichen Streifen von Reifenkomponenten unterschiedlicher vorgegebener Querschnitte an beabstandeten Orten längs der geförderten Lage (20) enthält.

5. Verfahren nach Anspruch 1, mit dem Schritt des Anheftens der kontinuierlichen Streifen von Reifenkomponenten an der geförderten Lage (20).

6. Verfahren nach Anspruch 1 mit den Schritten:
Lokalisieren einer Querkante (29) der Förderlage (20); und
Anlegen der kontinuierlichen Streifen von Reifenkomponenten an vorgegebenen Orten relativ zu der Querkante.

7. Verfahren nach Anspruch 1 mit den Schritten:
Extrudieren von Elastomermaterial (24) zum Formen mindestens eines der kontinuierlichen Streifen von Reifenkomponenten; und
Zuführen des Flusses von extrudiertem Material (25) zu Kalander-Walzen (350, 352), welche die Querschnittsform der Reifenkomponente bestimmen.

8. Verfahren nach Anspruch 7 mit dem Schritt des Aufteilens des Flusses von extrudiertem Material in zwei Flüsse (25A, 25B) von extrudiertem Material zu Kalander-Walzen (350, 352), wobei jeder Fluß den Kalander-Walzen Reifenkomponenten von bestimmter Querschnittsform zuführt.

9. Verfahren nach Anspruch 1, bei dem bei jeder Kalander-Anordnungsstation (300) ein Mittel (500) zum Anlegen der Vielzahl kontinuierlicher Streifen von Elastomer-Reifenkomponenten an mindestens eine Seite (21, 23) des Förderlagenmaterials (20) vorgesehen ist, während die Lage (20) zum Formen eines Laminats (10A) gefördert wird.

10. Verfahren nach Anspruch 9, bei dem das Mittel (500) zum Anlegen der Vielzahl kontinuierlicher Streifen von Elastomer-Reifenkomponenten an mindestens eine Seite (21, 23) des Förderlagenmaterials (20) eine unterhalb des endlosen Förderbandes (207) angeordnete Andrückwalze (502) ist, wobei die Andrückwalze (502) örtlich begrenzten Druck zwischen dem Band (207) und der Förderlage (20) und der Übertragungswalze (350) anlegt, welche die geformte Reifenkomponente trägt.

11. Verfahren nach Anspruch 1, bei dem die die Komponente formende Vertiefung (356) nur an der Übertragungswalze (250) angeordnet ist.

12. Vorrichtung (200) zum Aufbau eines Laminats (10A) aus einer Anordnung von Reifenkomponenten, welche eine Vielzahl von Kalander-Anordnungen (302) zum Formen eines Elastomer-Streifens oder Streifen von Reifenkomponenten enthält;
wobei die Kalander-Anordnungen (302) einem endlosen, über große Drehtrommeln (205) geführten Förderband (204) entlang beabstandet angeordnet und durch einen Motor (205A) mit variabler Geschwindigkeit angetrieben sind; und
jede Kalander-Anordnung (302) zwei Kalander-Walzen (350, 352) aufweist, von denen eine Walze die Übertragungswalze (350) und die andere die Folgewalze (352) ist;
**dadurch gekennzeichnet,**
**daß** die Walzen (350, 352) Komponentenformungs-Vertiefungen (356) aufweisen, die an einer oder an beiden Kalander-Walzen angeordnet sind;
**daß** jede Kalander-Anordnung (302) mindestens einen Motor, bevorzugt zwei Motoren (340, 342) aufweist;
**daß** ein Extruder (360) zum Zuführen bearbeiteten Materials zu dem Paar Kalander-Walzen (350, 352) vorgesehen ist;
**daß** Mittel (362) zum Erfassen und Messen des Fließens von Extrudat zu den Kalander-Walzen (350, 352) vorgesehen sind, und
**daß** die Anordnung von Reifenkomponenten zur Verwendung beim Ausbilden einer Karkasse (10) für einen Radiallagen-Luftreifen in einer ersten Reifenaufbaustufe geeignet ist.

13. Vorrichtung (200) nach Anspruch 12, bei der die Kalander-Anordnungen (302) zwei Motoren (340, 342) mit variabler Geschwindigkeit aufweisen, wobei jeweils ein Motor eine Walze (350, 352) antreibt.

14. Vorrichtung (200) nach Anspruch 12, bei der jede Anordnung ein Mittel (360) zum Zuliefern bearbeiteten Elastomer-Materials (25) zu einem Spalt (354) zwischen den beiden Kalander-Walzen aufweist.

15. Vorrichtung (200) nach Anspruch 12, bei der die Kalander-Anordnung (302) ein Mittel (320) zum Quer-Positionieren des bearbeiteten elastomeren Materials an einer vorgegebenen Querlage zwischen den Kalander-Walzen (350, 352) aufweist.

16. Vorrichtung (200) nach Anspruch 12, bei der das Kalanderanordnungs-Mittel (360) ein Aufheizmittel (333) oder ein Abkühlmittel (334) für die Kalander-Walzen (350, 352) enthält.

17. Vorrichtung (200) nach Anspruch 12, bei der die Komponentenformungs-Vertiefung (356) nur an der Übertragungswalze (250) angeordnet ist.

## Revendications

1. Procédé pour construire un stratifié (10A) à partir d'un assemblage de composants de bandage pneumatique, le procédé comprenant les étapes consistant à :
transporter une matière en nappe (20) constituée d'une matière élastomère (24) renforcée par des câblés (22), les câblés étant enrobés dans la matière élastomère et étant disposés en parallèle, tout en étant essentiellement équidistants ;
former plusieurs bandes continues de composants élastomères de bandage pneumatique, les bandes de composants du bandage pneumatique possédant des sections transversales prédéterminées ; et
appliquer l'ensemble de bandes continues de composants du bandage pneumatique sur au moins un côté de la matière en nappe (20) tandis que la matière en nappe est transportée, pour former un stratifié (10A) ; dans lequel la matière en nappe transportée (20) est déplacée à l'aide d'une courroie de transport sans fin (207) à une vitesse prédéterminée devant plusieurs moyens (300) pour former l'ensemble de bandes continues de composants élastomères du bandage pneumatique, dans lequel les moyens (300) pour former les composants du bandage pneumatique possèdent plusieurs assemblages de calandres (300) possédant chacun deux rouleaux de calandrage (350, 352), un rouleau représentant le rouleau de transfert et l'autre représentant le rouleau suiveur (352) ; **caractérisé**
**en ce que** les câblés de la matière en nappe (20) sont orientés en formant un angle entre 65 degrés et 90 degrés par rapport à la direction de transport ;
**en ce que** des renfoncements de formation de composants (356) sont disposés sur un des rouleaux de calandrage (350, 352) ou sur les deux et en ce que les composants du bandage pneumatique à l'état formé sont appliqués sur la matière en nappe (20) en train d'être transportée à environ la même vitesse que celle à laquelle le composant est en train d'être formé ou à une vitesse légèrement supérieure ; et
**en ce que** le stratifié est approprié pour être utilisé dans la formation d'une carcasse (10) dans un assemblage de bandage pneumatique du premier stade pour un bandage pneumatique (100) à nappe radiale.

2. Procédé selon la revendication 1, comprenant les étapes consistant à :
découper le stratifié (10A) à une longueur prédéterminée ; et
appliquer le stratifié (10A) sur un tambour de confection de pneumatique (5) pour former une carcasse non vulcanisée à partir du stratifié.

3. Procédé selon la revendication 1, dans lequel l'étape consistant à appliquer l'ensemble de bandes continues des composants du bandage pneumatique, englobe l'étape consistant à presser la nappe (20) en train d'être transportée contre les bandes de composants du bandage pneumatique à l'état formé pour ainsi fixer les composants à la nappe.

4. Procédé selon la revendication 1, dans lequel l'étape consistant à former les bandes continues des composants du bandage pneumatique, englobe l'étape consistant à calandrer plusieurs bandes continues de composants du bandage pneumatique de différentes sections transversales prédéterminées à des endroits espacés les uns des autres le long de la nappe transportée (20).

5. Procédé selon la revendication 1, comprenant l'étape consistant à moleter les bandes continues des composants du bandage pneumatique à la nappe transportée (20).

6. Procédé selon la revendication 1, comprenant les étapes consistant à :
localiser un bord latéral (29) de la nappe (20) en train d'être transportée ; et
appliquer les bandes continues des composants du bandage pneumatique à des endroits prédéterminés par rapport au bord latéral.

7. Procédé selon la revendication 1, comprenant les étapes consistant à :
extruder une matière élastomère (24) pour former au moins une des bandes continues des composants du bandage pneumatique ; et
alimenter l'écoulement de la matière extrudée (25) dans des rouleaux de calandrage (350, 352) qui déterminent la configuration du composant du bandage pneumatique en section transversale.

8. Procédé selon la revendication 7, comprenant l'étape consistant à séparer l'écoulement de la matière extrudée en deux écoulements (25A, 25B) de matière extrudée dans des rouleaux de calandrage (350, 352), chaque écoulement approvisionnant une matière formée par les rouleaux de calandrage en composants du bandage pneumatique de configurations distinctes en section transversale.

9. Procédé selon la revendication 1, dans lequel, à chaque poste d'assemblage par calandrage (300), on prévoit des moyens (500) pour appliquer l'ensemble des bandes continues des composants élastomères du bandage pneumatique à au moins un côté (21, 23) de la matière en nappe (20) en train d'être transportée, tandis que la nappe (20) est transportée pour former un stratifié (10A).

10. Procédé selon la revendication 9, dans lequel les moyens (500) pour appliquer l'ensemble de bandes continues des composants élastomères du bandage pneumatique à au moins un côté (21, 23) de la matière en nappe (20) en train d'être transportée sont un rouleau de pincement (502) disposé en dessous de la courroie de transport sans fin (207), le rouleau de pincement (502) appliquant une pression localisée entre la courroie (207) et la nappe (20) en train d'être transportée, et le rouleau de transfert (350) qui transporte le composant du bandage pneumatique à l'état formé.

11. Procédé selon la revendication 1, dans lequel les renfoncements (356) de formation des composants sont disposés uniquement sur le rouleau de transfert (250).

12. Appareil (200) pour construire un stratifié (10A) à partir d'un assemblage de composants de bandage pneumatique englobant plusieurs assemblages de calandres (302) pour former une bande ou des bandes élastomères de composants du bandage pneumatique ;
les assemblages de calandres (302) étant espacés les uns des autres le long d'une courroie de transport sans fin (204) enveloppant des tambours rotatifs de grande dimension (205) entraînés par un moteur à vitesse réglable (205A) ;
chaque assemblage de calandres (302) possédant deux rouleaux de calandrage (350, 352), un rouleau représentant le rouleau de transfert (350) et l'autre représentant le rouleau suiveur (352) ;
**caractérisé par le fait que**
les rouleaux (350, 352) possèdent des renfoncements (356) de formation de composants disposés sur un des rouleaux de calandrage ou sur les deux ;
chaque assemblage de calandres (302) possède au moins un, de préférence deux moteurs (340, 342) ;
une extrudeuse (360) pour alimenter de la matière traitée à la paire de rouleaux de calandrage (350, 352) ;
des moyens (362) pour détecter et mesurer l'écoulement de l'extrudat en direction des rouleaux de calandrage (350, 352) ;
et **par le fait que**
l'assemblage de composants du bandage pneumatique est approprié pour être utilisé dans la formation d'une carcasse (10) pour un bandage pneumatique à nappe radiale dans un assemblage de pneumatique du premier stade.

13. Appareil (200) selon la revendication 12, dans lequel les assemblages de calandres (302) possèdent deux moteurs à vitesse réglable (340, 342), un moteur entraînant chaque rouleau (350, 352).

14. Appareil (200) selon la revendication 12, dans lequel chaque assemblage possède un moyen 360 pour distribuer la matière élastomère traitée (25) à la ligne de contact (354) entre les deux rouleaux de calandrage.

15. Appareil (200) selon la revendication 12, dans lequel l'assemblage de calandres (302) possède un moyen (320) pour positionner en direction latérale la matière élastomère traitée à une position latérale prédéterminée entre les rouleaux de calandrage (350, 352).

16. Appareil (200) selon la revendication 12, dans lequel l'assemblage de calandres (302) englobe un moyen pour chauffer (333) ou un moyen pour refroidir (334) les rouleaux de calandrage (350, 352).

17. Appareil (200) selon la revendication 12, dans lequel les renfoncements (356) formant les composants sont disposés uniquement sur le rouleau de transfert (250).
